# EUROPÄISCHE PATENTSCHRIFT

(11) **EP 3 686 396 B1**
(45) Veröffentlichungstag und Bekanntmachung des Hinweises auf die Patenterteilung: **08.12.2021**
(21) Anmeldenummer: 20153363.5
(22) Anmeldetag: 23.01.2020
(51) Int. Cl.: F01D 5/14, F01D 9/04, F01D 17/16

(54) **LEITGITTER FÜR EINE STRÖMUNGSMASCHINE**
LEAD FRAME FOR A FLOW ENGINE
GRILLE D'AUBE DE GUIDAGE POUR UNE TURBOMACHINE

(30) Priorität: 24.01.2019 DE 102019200885
(43) Veröffentlichungstag der Anmeldung: 29.07.2020
(73) Patentinhaber: MTU Aero Engines AG, 80995 München (DE)
(72) Erfinder: Brignole, Giovanni, 80995 München (DE)

(56) Entgegenhaltungen:
- EP-A1- 2 696 042
- EP-A1- 2 913 478
- EP-A2- 0 043 452
- EP-A2- 1 424 467
- EP-A2- 2 189 664

## Beschreibung

### Technisches Gebiet

Die vorliegende Erfindung betrifft ein Leitgitter für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Dabei entzieht die Turbine dem Heißgas anteilig auch Energie, um den Verdichter anzutreiben.

Der vorliegende Gegenstand richtet sich auf ein Leitgitter, das insbesondere in einem Verdichter- bzw. Verdichtermodul Anwendung finden kann. Es weist verstellbare Leitschaufeln auf, die einzelnen Leitschaufeln sind also zur Veränderung eines Anströmwinkels jeweils um eine Drehachse verstellbar gelagert. Der Verstellwinkel lässt sich lastabhängig verändern und kann z. B. größer unter Teillast sein. Ein solches Leitgitter wird auch als Verstellgitter bezeichnet. EP2913478, EP2189664 und EP0043452 zeigen Strömungsmaschinen mit solchen Verstellgittern.

### Darstellung der Erfindung

Der vorliegenden Erfindung liegt das technische Problem zugrunde, ein besonders vorteilhaftes Leitgitter mit verstellbaren Leitschaufeln anzugeben.

Dies wird erfindungsgemäß mit dem Leitgitter gemäß Anspruch 1 gelöst. Dieses weist eine erste Leitschaufel und druckseitig davon eine zweite Leitschaufel auf, die axial versetzt angeordnet sind. Die Drehachse der zweiten Leitschaufel ist gegenüber der Drehachse der ersten Leitschaufel nach axial hinten versetzt. Ferner sind die erste und die zweite Leitschaufel hinsichtlich ihres Schaufelblattprofils und/oder ihres Verstellwinkels derart angepasst, dass sie in einem verstellten Zustand
- in einem radial äußeren Bereich miteinander eine Tandemkonfiguration bilden,
- in einem radial inneren Bereich miteinander jedoch einen divergierenden Kanal begrenzen.

Im Vergleich zu einem konventionellen Leitgitter ohne Axialversatz kann diese Anordnung mit Blick auf das nachgelagerte Laufgitter von Vorteil sein. Dort kann sich nämlich konventionell unter Teillast eine ungünstige Massenstromverteilung bzw. kann sich ein Massenstromdefekt radial außen ergeben, was die Belastung des Laufgitters erhöht. Der vorliegende Ansatz geht deshalb dahin, durch eine strömungstechnisch ungünstigere Gestaltung des Leitgitters radial innen eine Verteilung nach radial außen zu bewirken. In dem radial inneren Bereich bilden erste und die zweite Leitschaufel einen divergierenden Kanal, dieser stellt einen Diffusor dar. Entsprechend hoch werden radial innen Grenzschichtbelastung und Blockage bzw. die Profilverluste. Die Tandemkonfiguration, welche die Leitschaufeln radial außen bilden, ist im Vergleich strömungstechnisch günstiger. Dies führt im Ergebnis zu einer anteiligen Verlagerung des Massenstroms nach radial außen.

Bevorzugte Ausführungsformen finden sich in den abhängigen Ansprüchen und der gesamten Offenbarung, wobei in der Darstellung der Merkmale nicht immer im Einzelnen zwischen Vorrichtungs- oder Verwendungsaspekten unterschieden wird; jedenfalls implizit ist die Offenbarung hinsichtlich sämtlicher Anspruchskategorien zu lesen. "Ein" und "eine" sind im Rahmen dieser Offenbarung als unbestimmte Artikel und damit ohne ausdrücklich gegenteilige Angabe immer auch als "mindestens ein" bzw. "mindestens eine" zu lesen. Das Leitgitter kann bspw. jeweils eine Mehrzahl erste und eine Mehrzahl zweite Leitschaufeln aufweisen, bevorzugt ist es ausschließlich aus ersten und zweiten Leitschaufeln aufgebaut, die umlaufend abwechselnd aufeinander folgend angeordnet sind.

Die Verstellung bzw. nachstehend angegebenen Verstellwinkel der Leitschaufel beziehen sich auf deren Drehachsen. Alle übrigen Angaben, wie "axial", "radial" und "umlaufend", sowie die zugehörigen Richtungen, beziehen sich hingegen auf die Längsachse der Strömungsmaschine, die bspw. mit einer Rotationsachse der Laufgitter bzw. Rotoren zusammenfällt. Der radial innere Bereich liegt an der Nabe, der radial äußere am Gehäuse. Die hauptanspruchsgemäße Konfiguration betrifft den verstellten Zustand, in dem die Leitschaufeln um einen Verstellwinkel ausgelenkt sind (siehe unten im Detail). Im unverstellten Zustand ist das Leitgitter sowohl im radial inneren als auch im radial äußeren Bereich bevorzugt nicht umlenkend, es findet auch keine Umverteilung des Massenstroms von radial innen nach außen statt.

Der divergierende Kanal in dem radial inneren Bereich wird zwischen einer Druckseitenfläche der ersten Leitschaufel und einer Saugseitenfläche der zweiten Leitschaufel gebildet. In einem Profilschnitt betrachtet laufen diese Seitenflächen in Strömungsrichtung auseinander, sie bilden einen Diffusor. Die Schnittfläche des Profilschnitts ist dabei eine Umlauffläche, die sich axial und umlaufend erstreckt. Eine entsprechende Kanaldivergenz kann bspw. mindestens in den inneren 20 %, 30 % oder 40 % der radialen Schaufelblatthöhe vorliegen (mit einer möglichen Obergrenze bei z. B. höchstens 60 %).

In dem radial äußeren Bereich bilden die Leitschaufeln die Tandemkonfiguration, bildlich gesprochen "sieht" die Strömung die beiden Schaufeln dort als eine einzige Schaufel. Die Schaufeln begrenzen dort bevorzugt einen konvergierenden Kanal, die eben genannten Seitenflächen laufen also in einem Profilschnitt betrachtet aufeinander zu. Eine entsprechende Tandemkonfiguration kann bspw. mindestens in den äußeren 20 % (also zwischen 80 % und 100 %), 30 % oder 40 % der radialen Schaufelblatthöhe vorliegen (mit einer möglichen Obergrenze bei z. B. höchstens 60 %).

In bevorzugter Ausgestaltung unterscheiden sich die Leitschaufeln in zumindest einem der Bereiche in Ihrem Schaufelblattprofil, bevorzugt in beiden Bereichen. Bevorzugt ist eine Ausgestaltung dahingehend, dass die erste Leitschaufel radial außen eine längere Skelettlinie als die zweite Leitschaufel hat und/oder die zweite Leitschaufel radial innen eine längere Skelettlinie als die erste Leitschaufel hat. Die jeweilig längere Skelettlinie kann bspw. um mindestens 20 %, 30 % bzw. 40 % länger als die kürzere sein, mit möglichen (davon unabhängigen) Obergrenzen bei z. B. höchstens 80 %, 70 % bzw. 60 % (jeweils in der Reihenfolge der Nennung zunehmend bevorzugt). Die Prozentwerte werden dabei jeweils dort genommen, wo der Längenunterschied maximal ist, also in der Regel direkt an der Nabe (0 % der Schaufelblatthöhe) und direkt am Gehäuse (100 % der Schaufelblatthöhe). In einem mittleren Bereich, z. B. zwischen 40 % und 80 %, können die Profilformen weitgehend identisch sein.

Gemäß einer bevorzugten Ausführungsform liegen die Hinterkanten der Leitschaufeln in dem radial äußeren Bereich im Wesentlichen versatzfrei. Ein etwaiger Axialversatz dazwischen soll bspw. höchstens 1/4 des Versatzes zwischen den Drehachsen der Leitschaufeln ausmachen, wobei höchstens 1/8 bzw. 1/10 weiter und besonders bevorzugt sind. Zwischen den Hinterkanten kann es also einen allenfalls kleinen oder auch tatsächlich gar keinen Versatz geben.

In dem radial inneren Bereich sind hingegen die Vorderkanten bevorzugt im Wesentlichen versatzfrei angeordnet. Es wird auf die quantitativen Angaben des vorherigen Absatzes verwiesen (höchstens 1/4, 1/8 bzw. 1/10 des Versatzes zwischen den Drehachsen, oder auch gar kein Versatz). Die radial innen versatzfreien Vorderkanten der Leitschaufeln stehen bildlich gesprochen nebeneinander in der Strömung, sie werden davon als zwei separate Schaufeln "gesehen". Radial außen kann sich die nach hinten versetzte, zweite Leitschaufel hingegen an einen Hinterkantenbereich der ersten Leitschaufel "anschmiegen".

Generell kann der axiale Versatz zwischen den Drehachsen der ersten und zweiten Leitschaufel bspw. mindestens 10 % bzw. 20 % einer mittleren Skelettlinienlänge ausmachen, die sich als Mittelwert aus den auf mittlerer Schaufelblatthöhe (50 %) genommenen Skelettlinienlängen der ersten und zweiten Leitschaufel ergibt. Mögliche Obergrenzen des axialen Versatzes können bspw. bei höchstens 70 %, 60 % bzw. 50 % der mittleren Skelettlinienlänge liegen.

Gemäß einer bevorzugten Ausführungsform unterscheiden sich die erste und die zweite Leitschaufel im verstellten Zustand in ihren Verstellwinkeln. Jener der zweiten Leitschaufel kann bspw. um mindestens 20 % bzw. 30 % größer als jener der ersten Leitschaufel sein, wobei mögliche (davon unabhängige) Obergrenzen bei bspw. höchstens 60 % bzw. 50 % liegen können.

Der Verstellwinkel wird je Leitschaufel relativ zu einer Ebene genommen, welche die Drehachse der jeweiligen Leitschaufel beinhaltet und parallel zur axialen Richtung der Strömungsmaschine liegt. Generell kann der Verstellwinkel, um den die Leitschaufeln im verstellten Zustand verstellt sind, bei bevorzugt mindestens 30° liegen, wobei mindestens 40° bzw. 50° weiter und besonders bevorzugt sind. Mögliche Obergrenzen liegen (davon unabhängig) bspw. bei höchstens 70° bzw. 60°. Innerhalb dieses Bereichs kann der Verstellwinkel der zweiten Leitschaufel dann größer als jener der ersten sein, was bspw. bei einer Anordnung am selben Aktorring durch die unterschiedlichen Abstände und damit unterschiedlich langen Hebel erreicht werden kann.

Trotz des Axialversatzes liegen die Drehachsen der ersten und zweiten Leitschaufel in einer Projektion bevorzugt parallel zueinander, und zwar in einer Projektion in eine axiale Ebene. Letztere beinhaltet die Längsachse der Strömungsmaschine, in diese Ebene werden die Drehachsen in Umlaufrichtung projiziert.

Gemäß einer bevorzugten Ausführungsform begrenzen die erste Leitschaufel und eine weitere zweite Leitschaufel, die saugseitig davon angeordnet ist, in dem radial inneren Bereich miteinander einen divergierenden Kanal. Dies kann die strömungstechnisch ungünstige Situation radial innen und damit die Umverteilung nach radial außen verstärken.

Die Erfindung betrifft auch ein Verdichtermodul mit einem vorliegend offenbarten Leitgitter. Diesem nachgelagert weist das Modul ein Laufgitter auf, dessen Anströmung verbessert wird (siehe vorne).

Ferner betrifft die Erfindung ein Flugtriebwerk mit einem solchen Verdichtermodul bzw. Leitgitter.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können.

Im Einzelnen zeigt
- Figur 1: ein Flugtriebwerk in einem schematischen Axialschnitt;
- Figur 2: einen Profilschnitt durch ein erfindungsgemäßes Leitgitter in einem unverstellten Zustand in einem radial äußeren Bereich;
- Figur 3: einen schematischen Profilschnitt durch ein erfindungsgemäßes Leitgitter in einem unverstellten Zustand in einem radial inneren Bereich;
- Figur 4: einen schematischen Profilschnitt des Leitgitters analog Figur 2, jedoch in einem verstellten Zustand;
- Figur 5: einen schematischen Schnitt des Leitgitters analog Figur 3, jedoch in einem verstellten Zustand.

### Bevorzugte Ausführung der Erfindung

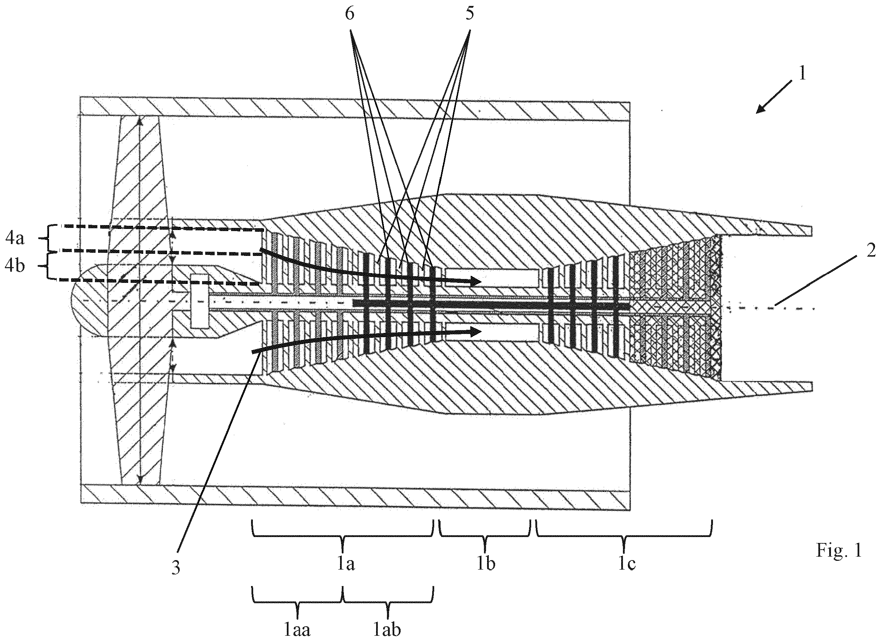

**Figur 1** zeigt eine Strömungsmaschine 1 im Schnitt, konkret ein Strahltriebwerk (Mantelstromtriebwerk). Die Strömungsmaschine 1 gliedert sich funktional in Verdichter 1a, Brennkammer 1b und Turbine 1c. Sowohl der Verdichter 1a als auch die Turbine 1c sind jeweils aus mehreren Modulen aufgebaut, der Verdichter 1a vorliegend aus einem Niederdruck- 1aa und einem Hochdruckverdichter lab. Jeder Verdichter 1aa, lab ist seinerseits aus mehreren Stufen aufgebaut, jede Stufe setzt sich in der Regel aus einem Leitgitter 5 und einem Laufgitter 6 zusammen. Im Betrieb wird der Verdichter 1a bezogen auf eine Längsachse 2 axial von dem Verdichtergas 3, vorliegend Luft, durchströmt.

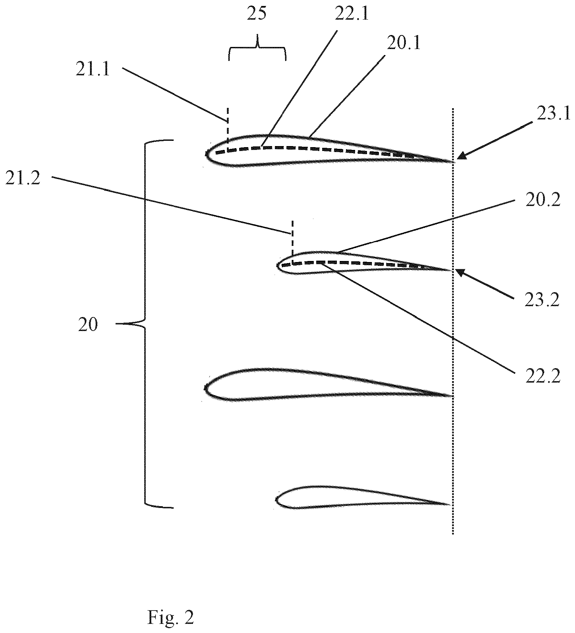

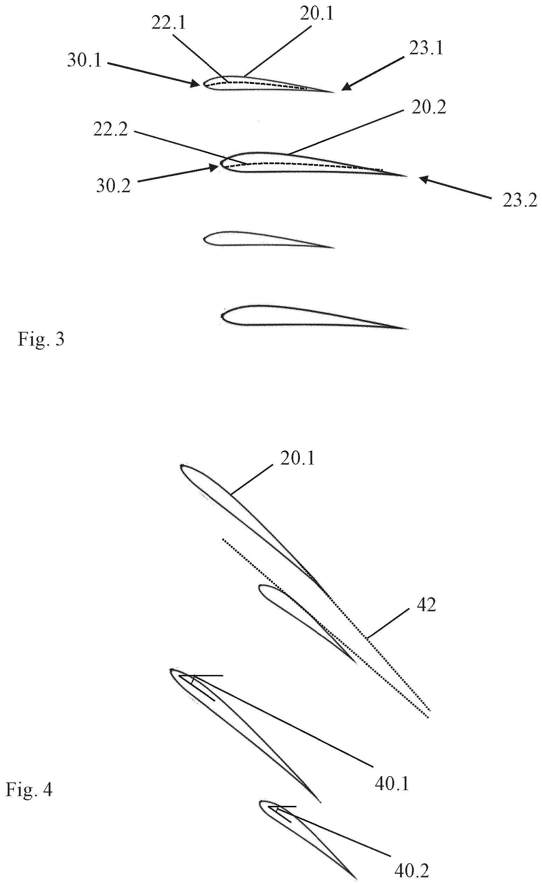

**Figur 2** zeigt einen Ausschnitt eines Leitgitters 5, nämlich mehrere Leitschaufeln 20 in einem Profilschnitt. Die Schnittfläche liegt radial in einem radial äußeren Bereich 4a (vgl. Figur 1), also am Gehäuse. Das Leitgitter 5 ist aus ersten Leitschaufeln 20.1 und zweiten Leitschaufeln 20.2 aufgebaut, die jeweils verstellbar gelagert sind, wobei in Figur 2 der unverstellte Zustand gezeigt ist (in Figur 4 der verstellte Zustand).

Die erste und zweite Leitschaufel 20.1,20.2 sind mit einem axialen Versatz 25 angeordnet, eine Drehachse 21.2 der zweiten Leitschaufel 20.2 ist gegenüber einer Drehachse 21.1 der ersten Leitschaufel nach axial hinten versetzt. Ferner ist eine Skelettlinie 22.1 der ersten Leitschaufel 20.1 in dem radial äußeren Bereich 4a länger als eine Skelettlinie 22.2 der zweiten Leitschaufel 20.2. Die Hinterkanten 23.1,23.2 liegen in etwa auf derselben axialen Höhe.

**Figur 3** zeigt einen Profilschnitt in einem radial inneren Bereich 4b (vgl. Figur 1), also an der Nabe. Dort liegen nicht die Hinter-, sondern die Vorderkanten 30.1,30.2 axial in etwa auf derselben Höhe, die Hinterkanten 23.1,23.2 sind hingegen versetzt. Ferner ist in dem radial inneren Bereich die Skelettlinie 22.1 der ersten Schaufel 20.1 kürzer als jene der zweiten Schaufel 20.2.

Die Figuren 2 und 3 zeigen, wie gesagt, den unverstellten Zustand, die Leitschaufeln 20 sind nicht zugedreht. In dieser Situation haben der Axialversatz und die unterschiedlichen Profilformen keinen weitergehenden Einfluss auf die Durchströmung des Leitgitters 5, dieser zeigt sich erst im zugedrehten Zustand.

Dies illustriert **Figur 4** für den radial äußeren Bereich 4a. Ein Verstellwinkel 40.1,40.2 der ersten und zweiten Leitschaufel 20.1,20.2 liegt hier jeweils bei rund 60° (es sind auch unterschiedlich große Verstellwinkel möglich, vgl. die Beschreibungseinleitung). Aufgrund des axialen Versatzes 25 zwischen den Drehachsen 21.1,21.2 und der anhand Figur 2 geschilderten Profilunterschiede schmiegt sich die zweite Leitschaufel 20.1 an einen Hinterkantenbereich der ersten Leitschaufel 20.1. Die beiden Leitschaufeln 20.1,20.2 bilden eine Tandemkonfiguration, sie begrenzen einen konvergierenden Kanal 42.

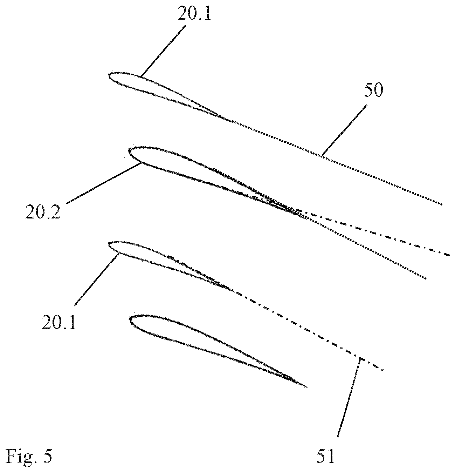

**Figur 5** illustriert für denselben Verstellwinkel 40.1,40.2 die Situation im radial inneren Bereich. Die beiden Leitschaufeln 20.1,20.2 begrenzen dort einen divergierenden Kanal 50. Ferner gibt es auch zwischen der ersten Leitschaufel 20.1 und der saugseitig davon angeordneten zweiten Leitschaufel 20.2 einen divergierenden Kanal 51. Die Konstellation radial innen ist strömungstechnisch schlechter als radial außen, die Grenzschichtbelastung ist radial innen höher. In der Folge kommt es zu einer anteiligen Umverteilung des Massenstroms nach radial außen. Verglichen mit einem konventionellen Gitter ohne Axialversatz und Schaufelanpassung wird der Massenstrom radial außen also erhöht, was hinsichtlich des nachgelagerten Laufgitters 6 von Vorteil ist, vgl. die Beschreibungseinleitung.

**BEZUGSZEICHENLISTE**

| | |
|---|---|
| Strömungsmaschine | 1 |
| Verdichter | 1a |
| Niederdruckverdichter | 1aa |
| Hochdruckverdichter | 1ab |
| Längsachse | 2 |
| Verdichtergas | 3 |
| Äußerer Bereich | 4a |
| Innerer Bereich | 4b |
| Leitgitter | 5 |
| Laufgitter | 6 |
| Leitschaufeln | 20 |
| Erste Leitschaufel | 20.1 |
| Zweite Leitschaufel | 20.2 |
| Drehachsen (erste, zweite) | 21.1,21.2 |
| Skelettlinien (erste, zweite) | 22.1,22.2 |
| Hinterkanten (erste, zweite) | 23.1,23.2 |
| Axialer Versatz | 25 |
| Vorderkanten (erste, zweite) | 30.1.30.2 |
| Verstellwinkel (erster, zweiter) | 40.1,40.2 |
| Konvergierender Kanal | 42 |
| Divergierende Kanäle | 50,51 |

## Patentansprüche

1. Leitgitter (5) für eine Strömungsmaschine (1),
welches Leitschaufeln (20) aufweist, die zur Veränderung eines Anströmwinkels jeweils um eine Drehachse (21.1,21.2) verstellbar gelagert sind,
wobei eine erste Leitschaufel (20.1) und eine druckseitig davon angeordnete zweite Leitschaufel (20.2) bezogen auf eine Längsachse (2) der Strömungsmaschine (1) mit einem axialen Versatz (25) angeordnet sind, nämlich die Drehachse (21.2) der zweiten Leitschaufel (20.2) axial nach hinten versetzt ist,
**dadurch gekennzeichnet, dass** die erste Leitschaufel (20.1) und die zweite Leitschaufel in einem verstellten Zustand
- in einem radial äußeren Bereich (4a) miteinander eine Tandemkonfiguration bilden,
- in einem radial inneren Bereich (4b) miteinander jedoch einen divergierenden Kanal (50) begrenzen.

2. Leitgitter (5) nach Anspruch 1, bei welchem sich die erste und die zweite Leitschaufel (20.1,20.2) in zumindest einem der Bereiche (4a,b) in ihrem Schaufelblattprofil unterscheiden.

3. Leitgitter (5) nach Anspruch 2, bei welchem in dem radial äußeren Bereich (4a) die erste Leitschaufel (20.1) eine längere Skeletlinie (22.1) als die zweite Leitschaufel (20.2) hat.

4. Leitgitter (5) nach Anspruch 3, bei welchem die Skelettlinie (22.1) der ersten Leitschaufel in dem radial äußeren Bereich (4a) um mindestens 20 % länger als die Skelettlinie (22.2) der zweiten Leitschaufel (20.2) ist.

5. Leitgitter (5) nach einem der Ansprüche 2 bis 4, bei welchem in dem radial inneren Bereich (4b) die zweite Leitschaufel (20.2) eine längere Skeletlinie (22.2) als die erste Leitschaufel (20.1) hat.

6. Leitgitter (5) nach Anspruch 5, bei welchem die Skelettlinie (22.2) der zweiten Leitschaufel in dem radial inneren Bereich (4b) um mindestens 20 % länger als die Skelettlinie (22.1) der ersten Leitschaufel (20.1) ist.

7. Leitgitter (5) nach einem der Ansprüche 2 bis 6, bei welchem in dem radial äußeren Bereich (4a) eine Hinterkante (23.1) der ersten Leitschaufel (20.1) und eine Hinterkante (23.2) der zweiten Leitschaufel (20.2) um höchstens 1/4 des axialen Versatzes (25) zwischen den Drehachsen (21.1,21.2) der ersten und der zweiten Leitschaufel (20.1,20.2) axial versetzt angeordnet sind.

8. Leitgitter (5) nach einem der Ansprüche 2 bis 7, bei welchem in dem radial inneren Bereich (4b) eine Vorderkante (30.1) der ersten Leitschaufel (20.1) und eine Vorderkante (30.2) der zweiten Leitschaufel (20.2) um höchstens 1/4 des axialen Versatzes (25) zwischen den Drehachsen (21.1,21.2) der ersten und der zweiten Leitschaufel (20.1,20.2) axial versetzt angeordnet sind.

9. Leitgitter (5) nach einem der vorstehenden Ansprüche, bei welchem die erste und die zweite Leitschaufel (20.1,20.2) in dem verstellten Zustand um unterschiedlich große Verstellwinkel (40.1,40.2) verstellt sind.

10. Leitgitter (5) nach Anspruch 9, bei welchem der Verstellwinkel (40.2) der zweiten Leitschaufel (20.2) in dem verstellten Zustand um mindestens 20 % größer als der Verstellwinkel (40.1) der ersten Leitschaufel (20.1) ist.

11. Leitgitter (5) nach einem der vorstehenden Ansprüche, bei welchem ein jeweiliger Verstellwinkel (40,1,40.2), um welchen die Leitschaufeln (20.1,20.2) in dem verstellten Zustand jeweils verstellt sind, jeweils mindestens 30° beträgt.

12. Leitgitter (5) nach einem der vorstehenden Ansprüche, bei welchem die Drehachsen (21.1,21.2) der ersten und der zweiten Leitschaufel (20.1,20.2) in einer Projektion parallel zueinander liegen, und zwar in einer Projektion in Umlaufrichtung in eine axiale Ebene.

13. Leitgitter (5) nach einem der vorstehenden Ansprüche, bei welchem die erste Leitschaufel (20.1) und eine weitere zweite Leitschaufel (20.2), die saugseitig der ersten Leitschaufel (20.1) angeordnet ist, in dem radial inneren Bereich (4b) miteinander einen divergierenden Kanal (51) begrenzen.

14. Verdichtermodul (1aa, 1ab) für eine Strömungsmaschine (1) mit einem Leitgitter (5) nach einem der vorstehenden Ansprüche.

15. Flugtriebwerk mit einem Leitgitter (5) nach einem der Ansprüche 1 bis 13 oder einem Verdichtermodul (1aa, 1ab) nach Anspruch 14.

## Claims

1. Guide baffle (5) for a turbomachine (1),
which has guide vanes (20) which are mounted so as to be adjustable about an axis of rotation (21.1, 21.2) in each case in orderto change an inflowangle,
with a first guide vane (20.1) and a second guide vane (20.2) arranged on the pressure side thereof being arranged with an axial offset (25) relative to a longitudinal axis (2) of the turbomachine (1), namely the axis of rotation (21.2) of the second guide vane (20.2) is axially offset to the rear,
**characterized in that** the first guide vane (20.1) and the second guide vane, in an adjusted state,
- form a tandem configuration with one another in a radially outer region (4a),
- but delimit a diverging channel (50) with one another in a radially inner region (4b).

2. Guide baffle (5) according to claim 1, wherein the first and the second guide vane (20.1, 20.2) differ in their airfoil profile in at least one of the regions (4a, b).

3. Guide baffle (5) according to claim 2, wherein, in the radially outer region (4a), the first guide vane (20.1) has a longer skeleton line (22.1) than the second guide vane (20.2).

4. Guide baffle (5) according to claim 3, wherein the skeleton line (22.1) of the first guide vane in the radially outer region (4a) is at least 20% longer than the skeleton line (22.2) of the second guide vane (20.2).

5. Guide baffle (5) according to any of claims 2 to 4, wherein, in the radially inner region (4b), the second guide vane (20.2) has a longer skeleton line (22.2) than the first guide vane (20.1).

6. Guide baffle (5) according to claim 5, wherein the skeleton line (22.2) of the second guide vane in the radially inner region (4b) is at least 20% longer than the skel eton line (22.1) of the first guide vane (20.1).

7. Guide baffle (5) according to any of claims 2 to 6, wherein, in the radially outer region (4a), a trailing edge (23.1) of the first guide vane (20.1) and a trailing edge (23.2) of the second guide vane (20.2) are arranged so as to be axially offset by at most 1/4 of the axial offset (25) between the axes of rotation (21.1, 21.2) of the first and the second guide vane (20.1, 20.2).

8. Guide baffle (5) according to any of claims 2 to 7, wherein, in the rad ially inner region (4b), a leading edge (30.1) of the first guide vane (20.1) and a leading edge (30.2) of the second guide vane (20.2) are arranged so as to be axially offset by at most 1/4 of the axial offset (25) between the axes of rotation (21.1, 21.2) of the first and the second guide vane (20.1, 20.2).

9. Guide baffle (5) according to any of the preceding claims, wherein the first and second guide vane (20.1, 20.2) are adjusted in the adjusted state by adjustment angles (40.1, 40.2) of different sizes.

10. Guide baffle (5) according to claim 9, wherein the adjustment angle (40.2) of the second guide vane (20.2) in the adjusted state is at least 20% greater than the adjustment angle (40.1) of the first guide vane (20.1).

11. Guide baffle (5) according to any of the preceding claims, wherein a relevant adjustment angle (40,1, 40.2) by which the guide vanes (20.1, 20.2) are adjusted in the adjusted state is at least 30°.

12. Guide baffle (5) according to any of the preceding claims, wherein the axes of rotation (21.1, 21.2) of the first and the second guide vane (20.1, 20.2) are parallel to one another in a projection, namely in a projection in the circumferential direction in an axial plane.

13. Guide vane (5) according to any of the preceding claims, wherein the first guide vane (20.1) and a further second guide vane (20.2) which is arranged on the suction side of the first guide vane (20.1) delimit a diverging channel (51) with one anotherin the radially inner region (4b).

14. Compressor module (1aa, 1ab) for a turbomachine (1) comprising a guide baffle (5) according to any of the preceding claims.

15. Aircraft engine comprising a guide baffle (5) according to any of claims 1 to 13 or a compressor module (1aa, 1ab) according to claim 14.

## Revendications

1. Grille directrice (5) pour turbomachine (1),
laquelle présente des aubes directrices (20) qui sont montées de manière réglable autour de respectivement un axe de rotation (21.1,21.2) et permettent de changer un angle d'incidence,
une première aube directrice (20.1) et une seconde aube directrice (20.2), disposée côté pression de celle-ci, étant disposées avec un décalage axial (25) par rapport à un axe longitudinal (2) de la turbomachine (1), à savoir l'axe de rotation (21.2) de la seconde aube directrice (20.2) étant décalé axialement vers l'arrière,
**caractérisée en ce que**
la première aube directrice (20.1) et la seconde aube directrice, dans un état réglé
- forment une configuration en tandem l'une avec l'autre dans une zone radialement extérieure (4a),
- délimitent cependant un canal divergent (50) l'une avec l'autre dans une zone radialement intérieure (4b).

2. Grille directrice (5) selon la revendication 1, dans laquelle les première et seconde aubes directrices (20.1, 20.2) diffèrent par leur profil de pale d'aube dans au moins une des zones (4a, b).

3. Grille directrice (5) selon la revendication 2, dans laquelle la première aube directrice (20.1) possède un squelette (22.1) plus long que la seconde aube directrice (20.2) dans la zone radialement extérieure (4a).

4. Grille directrice (5) selon la revendication 3, dans laquelle le squelette (22.1) de la première aube directrice est au moins 20 % plus long que le squelette (22.2) de la seconde aube directrice (20.2) dans la zone radialement extérieure (4a).

5. Grille directrice (5) selon l'une des revendications 2 à 4, dans laquelle la seconde aube directrice (20.2) possède un squelette (22.2) plus long que la première aube directrice (20.1) dans la zone radialement intérieure (4b).

6. Grille directrice (5) selon la revendication 5, dans laquelle le squelette (22.2) de la seconde aube directrice est au moins 20 % plus long que le squelette (22.1) de la première aube directrice (20.1) dans la zone radialement intérieure (4b).

7. Grille directrice (5) selon l'une des revendications 2 à 6, dans laquelle, dans la zone radialement extérieure (4a), un bord de fuite (23.1) de la première aube directrice (20.1) et un bord de fuite (23.2) de la seconde aube directrice (20.2) sont disposés de manière axialement décalée d'au plus 1/4 du décalage axial (25) entre les axes de rotation (21.1,21.2) des première et seconde aubes directrices (20.1,20.2).

8. Grille directrice (5) selon l'une des revendications 2 à 7, dans laquelle, dans la zone radialement intérieure (4b), un bord d'attaque (30.1) de la première aube directrice (20.1) et un bord d'attaque (30.2) de la seconde aube directrice (20.2) sont disposés de manière axialement décalée d'au plus 1/4 du décalage axial (25) entre les axes de rotation (21.1,21.2) des première et seconde aubes directrices (20.1,20.2).

9. Grille directrice (5) selon l'une des revendications précédentes, dans laquelle les première et seconde aubes directrices (20.1,20.2) sont réglées, à l'état réglé, par des angles de réglage (40.1,40.2) de tailles différentes.

10. Grille directrice (5) selon la revendication 9, dans laquelle l'angle de réglage (40.2) de la seconde aube directrice (20.2), à l'état réglé, est supérieur d'au moins 20 % à l'angle de réglage (40.1) de la première aube directrice (20.1).

11. Grille directrice (5) selon l'une des revendications précédentes, dans laquelle un angle de réglage (40.1,40.2) respectif, selon lequel les aubes directrices (20.1,20.2) sont respectivement réglées à l'état réglé, est respectivement d'au moins 30°.

12. Grille directrice (5) selon l'une des revendications précédentes, dans laquelle les axes de rotation (21.1,21.2) des première et seconde aubes directrices (20.1,20.2) sont parallèles l'un à l'autre dans une projection, à savoir dans une projection dans la direction circonférentielle dans un plan axial.

13. Grille directrice (5) selon l'une des revendications précédentes, dans laquelle la première aube directrice (20.1) et une autre seconde aube directrice (20.2), laquelle est disposée côté aspiration de la première aube directrice (20.1), délimitent un canal divergent (51) l'une avec l'autre dans la zone radialement intérieure (4b).

14. Module compresseur (1aa, 1ab) pourturbomachine (1) comportant une grille directrice (5) selon l'une des revendications précédentes.

15. Moteur d'aéronef comportant une grille directrice (5) selon l'une des revendications 1 à 13 ou un module compresseur (1aa, 1ab) selon la revendication 14.
